# EUROPEAN PATENT SPECIFICATION

(11) **EP 4 547 031 B1**
(45) Date of publication and mention of the grant of the patent: **30.09.2026**
(21) Application number: 23713390.5
(22) Date of filing: 24.03.2023
(51) Int. Cl.: A23G 3/42, A23L 29/212, A23L 29/30

(54) **STARCH BASED GELATINE REPLACEMENT PRODUCTS**
STÄRKEBASIERTE GELATINEERSATZPRODUKTE
PRODUITS DE REMPLACEMENT DE LA GÉLATINE À BASE D'AMIDON

(30) Priority: 30.06.2022 EP 22182087
(43) Date of publication of application: 07.05.2025
(73) Proprietor: KMC, Kartoffelmelcentralen, AMBA, 7330 Brande (DK)
(72) Inventor: SØRENSEN, Ole Bandsholm, 7330 Brande (DK); CHRISTENSEN, Line Bach, 7330 Brande (DK); JALUM, Mia Rix, 7330 Brande (DK)
(74) Representative: Plougmann Vingtoft a/s
(86) International application number: PCT/EP2023/057670
(87) International publication number: WO 2024/002537

(56) References cited:
- EP-B1- 0 768 042
- WO-A1-00/44241
- JP-A- 2013 081 432
- US-A- 5 576 043
- RAPAILLE A ET AL: "Modified starches(Thickening and gelling agents for food)", AHAN - FOOD, INSTITUTE OF FOOD RESEARCH AND PRODUCT DEVELOPMENT, BANGKOK, TH, vol. Glasgow, 1 January 1992 (1992-01-01), pages 171 - 201, XP008085856, ISSN: 0125-1147

## Description

### Technical field of the invention

The present invention relates to starch based gelatine replacements. More specifically the invention relates to optimized compositions comprising cross-linked starch and depolymerized starches. In particular, the present invention relates to the use of such gelatine replacements in the production of gummy candy.

### Background of the invention

Gelatine is a well-known gelling agent in the production of foodstuff. There are several reasons to try to find efficient substitutes for gelatine in the food industry.

Gelatine is produced from animal materials. This makes foodstuff comprising gelatine unacceptable for e.g. religious reasons, dietary reasons (such as to vegetarians and vegans), animal welfare reasons, and not the least, environmental reasons, since animal production leaves a high carbon footprint. In general, the public interest in plant-based foods is growing.

JP 2013 081 432 A discloses gummy candy excellent in flavor, color tone, elasticity and crispness characterized by being prepared by containing acid-treated starch as a gelling agent and crosslinked starch having a sedimentation volume of 3.0 to 9.9 (30% to 99%).

WO 00/44241 discloses compositions based on different combinations of cross-linked starch and depolymerized starch suitable as gelatine replacement. Gummy candy prepared using the gelatine replacements of WO 00/44241 are dried at 50°C.

US 5 576 043 A discloses a shortening composition comprising a pregelatinized crosslinked starch hydroxypropylated waxy corn starch and maltodextrin (Example 4).

EP 0 768 042 B1 discloses a combination of maltodextrin and acetylated distarch adipate.

Hence, an improved gelling agent which can be dried under different temperature regimes would be advantageous, and in particular a more efficient and/or reliable gelling agent which can be dried at lower temperatures would be advantageous. Furthermore, decreasing stoving temperatures will make the production of starch-based gummy candies applicable for a wider range of producers, and will also be more sustainable due to less energy input.

### Summary of the invention

The present invention is based on the realization that a composition comprising an optimized ratio of cross-linked starch to depolymerized starch is suited as starting material for the production of a gelled product, such as gummy candy. In particular, such produced product can be dried at lower temperatures (such as 25°C), which is lower than other starch-based gelling agents, while still resulting in a consumer product, resembling gelatine based gelled products, such as gummy candies. This low drying temperature makes it easy to switch from a gelatine-based production to a starch-based production, since no major change to drying facilities are required. See also example 2-5 for details.

Albeit the starch-based gelling agents according to the present invention are suitable for drying at e.g. 25°C, they also provide improved gummy candy, when dried at e.g. 50°C.

The gummy candy prepared using the gelatine replacements of WO 00/44241 are dried at 50°C. The content of WO 00/44241 is incorporated in here by reference. Again, a disadvantage of such high drying temperature is that gelatine-containing confectionary, such as gummy candy or wine gums are normally dried at around 25°C, making it expensive and difficult to switch from gelatine-based production to starch-based production, since other drying facilities are required.

Thus, an object of the present invention relates to the provision of an optimized starch-based starting material for production of gelled foodstuff, such as gummy candy.

In particular, it is an object of the present invention to provide a starch-based starting material that solves the above-mentioned problems of the prior art with high drying temperature.

A starch-based starting product may be improved in relation to firmness of the final product, elasticity of the final product and/or non-stickiness of the final product. An improvement may also be an overall improvement, e.g. by summing the scores for firmness, elasticity and/or non-stickiness. For scoring, we refer to the example section.

As shown in the example section:
- Example 1 shows a flow diagram of a preferred embodiment of the process according to the invention.
- Examples 2-5 show that using optimized ratios of cross-linked starch to depolymerized starch, gummy candy with improved organoleptic parameters is obtained, when dried at 50°C and importantly also when dried at 25°C.
- Examples 2-5 further show that both cook-up starches and pregelatinized starches results in gummy candy with improved organoleptic parameters, when dried at 50°C and importantly also when dried at 25°C.

Thus, one aspect of the invention relates to a process for producing gelled foodstuff, such as gummy candy, the process comprising
a) providing a mixture comprising
   - one or more cross-linked starches;
   - one or more depolymerized starches; and
   - a water content in the range 10-30% by weight;

   wherein the ratio by weight between the one or more cross-linked starches and the one or more depolymerized starches is in the range 90:10 to 45:55, preferably 70:30 to 45:55,
   wherein the mixture comprises 3-25% wt of the one or more cross-linked starches and the one or more depolymerized starches in total;
b) cooking the mixture of step a) at a temperature in the range 100-160°C, preferably until the mixture reaches a Degrees Brix (°Bx) in the range 70-80°Bx, thereby providing a heated gummy mass;
c) optionally, molding the gelled mass of step b), into a desired shape;
d) drying the heated gummy mass of step b) or optionally step c) at a temperature in the range 10-70°C, preferably in the range 20-65°C; and
e) providing a gelled foodstuff, such as gummy candy;

wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

Yet another aspect of the present invention is to provide a composition comprising
- one or more cross-linked starches; and
- one or more depolymerized starches;

wherein the ratio by weight between the one or more cross-linked starches and the one or more depolymerized starches is in the range 90:10 to 45:55, preferably 70:30 to 45:55, more preferably 70:30 to 50:50;
wherein the mixture comprises 3-25% wt of the one or more cross-linked starches and the one or more depolymerized starches in total;
wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27);
wherein the one or more depolymerized starches has a level of dextrose equivalents (DE) below 2.

Still another aspect of the present invention is to provide a combination of parts comprising
- a first container comprising one or more cross-linked starches;
- a second container comprising one or more depolymerized starches; and
- instructions for performing a process according to the invention;

wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

Yet an aspect of the invention relates to the use of the composition or the combination of parts according to the invention as a gelling agent.

### Brief description of the figures

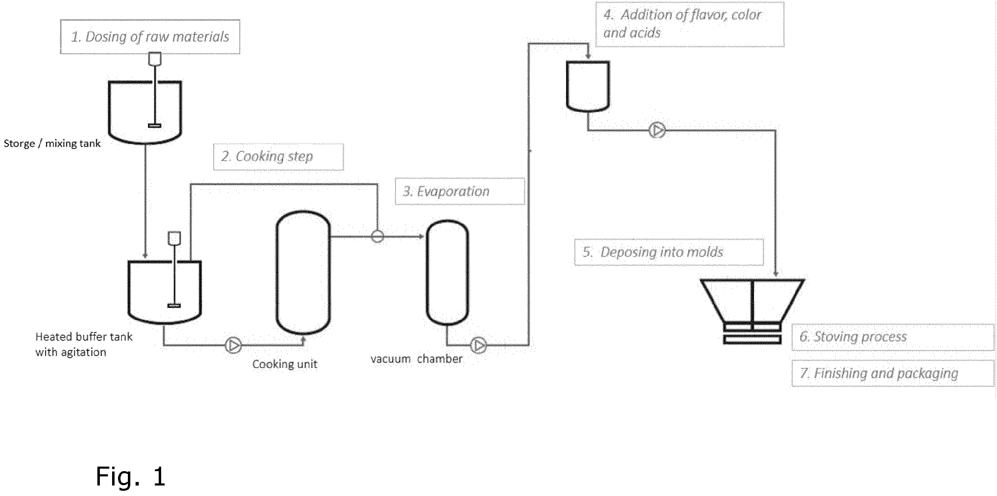

Figure 1 shows a flow diagram of a preferred embodiment of the process of the invention.

The present invention will now be described in more detail in the following.

### Detailed description of the invention

### Definitions

Prior to discussing the present invention in further details, the following terms and conventions will first be defined:

### Gummy candy/wine gums

Gummy candy or wine gums are overall containing a sugar system, colorants, flavours and a gelling agent (hydrocolloid). The most widely used gelling agent is gelatine. It is to be understood that sugar-free alternatives also exist.

Examples of gelling agents or hydrocolloids are carrageenan, agar, xanthan gum, locust bean gum, gellan gum, gum arabic, pectin, gelatine, kappa-carrageenan, guar gum, and modified or unmodified starches.

The starch composition according to the present invention may substitute for any of the above gelling agents or hydrocolloids, in particular gelatine.

In the present context, the terms "gummy candy", "wine gums", "jellies" or "gummies" are used interchangeably as examples of gelled foodstuff according to the present invention.

### Gelatine

Gelatine is a collection of peptides and proteins produced by partial hydrolysis of collagen extracted from the skin, bones, and connective tissues of animals such as domesticated cattle, chicken, pigs, and fish.

Gelatine is a well-known gelling agent, e.g. in the production of gummy candy.

### Pregelatinized starch (CWS)

Starch of all botanical material is by nature insoluble in cold water. Such starches extracted form it biological source is called a native starch.

In many applications, there is a wish to have a starch that is soluble in cold water or being able to bring viscosity to cold water. This can be done by pregelatinizing the starch. All types of starch, native or modified, can be pregelatinized.

Pregelatinizing can be done in many ways known to the people skilled in the art.

In the present context, the terms "CWS starch" and "cold water swelling starch" refer to starches that has been pregelatinized and thereby made able to swell in cold water and increase its viscosity. Pregelatinization of starch is a well-known technology in the art that can be performed by e.g. drum drying, spray-cooking, extrusion, cooking in alcohol and others. All pregelatinized starches tested in the examples are made by spray-cooking unless marked with *), which indicate that they are made by drum-drying.

### Modified starch

In general, the term 'modified starch' is a starch that is not native. Something has been done to change the behavior of the native starch. This is typically done physical (e.g., pregelatinized starch), chemical (e.g., cross-linked starch) or enzymatical (e.g., hydrolyzed starch) or combinations thereof. Often you will find that when talking about modified starch it is related to the chemical modified starches.

There are around a handful of chemical modified starches that is allowed to be used in food. Among these, there are cross-linked starches and depolymerized starches.

### Cook-up starches (CU)

In the present context, the term "cook-up starch" refers to starches that needs to be heated in water to gelatinize and swell, thereby increasing the viscosity. Such starches can be native starches or chemically, physically or enzymatically modified starches.

### Cross-linked starch

Cross-linked starches, such as cross-linked potato starch or cross-linked tapioca starch, are well known in the art including their preparation.

Examples of cross-linking agents are epichlorohydrin, sodium trimetaphosphate, phosphorous oxychloride (POCI3), adipic anhydride, or other reagents with two or more halogen, halohydrin or epoxide groups or combinations, which all can be used as cross-linking agents. Preferred are distarch phosphates and distarch adipates.

Examples of cross-linked starches are: Distarch phosphate, acetylated distarch phosphate, hydroxypropylated distarch phosphate, and acetylated distarch adipate. D-starch phosphates can either be further acetylated or hydroxypropylated. Di-starch adipate is always acetylated.

Cross-linking of starch can be done either by a phosphate bridge (in form of di-starch phosphate) or an adipate bridge (in form of di-starch adipate). Both types can be cross-linked to different degrees. The degree of cross-linking may be determined by the sediment-volume method as described in in JP 2013 081 462. Also the degree of cross-linking may be determined as described in JECFA Monograph 27 for modified starches (Compendium of Food Additive Specifications. Joint FAO/WHO Expert Committee on Food Additives (JECFA), 92nd meeting 2021. FAO JECFA Monographs 27).

In an embodiment, the one or more cross-linked starches has a sedimentation volume of 25 to 99% of the tested volume. In a related embodiment, degree of cross-linking is determined by the sediment-volume method as outlined in JECFA Monograph 27 for modified starches (Compendium of Food Additive Specifications. Joint FAO/WHO Expert Committee on Food Additives (JECFA), 92nd meeting 2021. FAO JECFA Monographs 27) on pages 12-13.

In yet an embodiment, the cross-linked starches are of the type E1412 or E1422 according to COMMISSION REGULATION (EU) No 231/2012 of 9 March 2012. In here E1412 is defined as "Distarch phosphate is starch cross-linked with sodium trimetaphosphate or phosphorus oxychloride". E1422 is defined as acetylated distarch adipate.

### Depolymerized starch

Depolymerized starches, such as depolymerized potato starch or depolymerized tapioca starch, are well known in the art including their preparation.

Depolymerised starch is in general obtained by a reduction in the degree of polymerisation of the starch chains by physical, chemical or enzymatic action, and results in general in a reduction of the size (molecular weight) of the starch molecules. Depolymerization of starch can be done chemical or enzymatical. Examples of depolymerization agents are inorganic acids (like hydrochloric or sulphuric acid), hypochlorite and other chlorinous products, starch degrading/hydrolysing enzymes.

The depolymerized starch may further be esterified or etherified.

Depolymerization is controlled so the level of dextrose equivalents (DE) is below 2. Depolymerized starch with a DE of 2 - 20 is called maltodextrins and from 20 - 60 it is called glucose syrup. Thus, maltodextrin is not a depolymerized starch in normal starch terminology.

Thus, in a preferred embodiment, the depolymerized starch(es) has a level of dextrose equivalents (DE) below 2. In a related embodiment, dextrose equivalents (DE) is determined by ISO5377:1981.

### Sensory evaluation

The gummy candies were tested by a trained panel for a number of sensory attributes. The products were evaluated on a sensoric scale from 1 to 10, and a general acceptance scale from 3 to 15.

### Process for producing gummy candy

As also outlined above, and shown in the example section, the present invention relates to an optimized process for producing gelled foodstuff, such as gummy candy. Thus, an aspect of the invention relates to a process for producing gelled foodstuff, such as gummy candy, the process comprising
a) providing a mixture comprising
   - one or more cross-linked starches;
   - one or more depolymerized starches; and
   - a water content in the range 10-30% by weight;

   wherein the ratio by weight between the one or more cross-linked starches and the one or more depolymerized starches is in the range 90:10 to 45:55, preferably 70:30 to 45:55,
   wherein the mixture comprises 3-25% wt of the one or more cross-linked starches and the one or more depolymerized starches in total;
b) cooking the mixture of step a) at a temperature in the range 100-160°C, preferably until the mixture reaches a Degrees Brix (°Bx) in the range 70-80°Bx, thereby providing a heated gummy mass;
c) optionally, molding the gelled mass of step b), into a desired shape;
d) drying the heated gummy mass of step b) or optionally step c) at a temperature in the range 10-70°C, preferably in the range 20-65°C; and
e) providing a gelled foodstuff, such as gummy candy;

wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

As shown in examples 2-5 an optimized ratio of cross-linked starch to depolymerized starch has been identified allowing for drying/stoving at a wider temperature range, such as relatively cold such as 20-30°C or warmer such as 45-55°C.

### Step a)

Different types of cross-linked starches may be used. Thus, in an embodiment, the one or more cross-linked starches in step a) are selected from the group consisting of i) distarch phosphate, such as acetylated distarch phosphate, hydroxypropylated distarch phosphate; and ii) acetylated distarch adipate. Again, in examples 2-5 different types of cross-linked starches have been verified to work in a process according to the invention.

In another embodiment, the cross-linked starch is not depolymerized.

In another embodiment, the one or more cross-linked starches has a sedimentation volume in the range 25% to 99% of the tested volume.

Different types of depolymerized starches may be used. Thus, in another embodiment, the one or more depolymerized starches in step a) are selected from the group consisting of i) acid hydrolysed starch, such as acetylated acid hydrolysed starch, hydroxypropylated acid hydrolysed starch, ii) oxidised starch, such as acetylated oxidised starch, hydroxypropylated oxidised starch, and iii) enzymatically hydrolysed starch, such as enzymatically hydrolysed modified starch. Again, in examples 2-5 different types of depolymerized starches have been verified to work in a process according to the invention.

In another embodiment, depolymerised starch is not cross-linked.

In yet an embodiment, the one or more depolymerized starches has a level of dextrose equivalents (DE) below 2.

The source of starch may also differ. Hence, in an embodiment, the one or more cross-linked starches and/or the one or more depolymerized starches in step a) are selected from the group consisting of root and tuber starches, preferably potato starch or tapioca starch, more preferably both being potato starches.

In a preferred embodiment, one or more of the cross-linked starches in step a) is a pregelatinized starch.

In another embodiment, one or more of the cross-linked starches in step a) is a cook-up starch.

In yet another preferred embodiment, one or more of the depolymerized starches in step a) is a pregelatinized starch.

In a further embodiment, one or more of the depolymerized starches in step a) is a cook-up starch.

The ratio between the starch types may vary. Thus, in an embodiment, the ratio by weight between the one or more cross-linked starches and the one or more depolymerized starches in step a) is in the range 80:20 to 40:60, preferably 70:30 to 40:60, more preferably 70:30 to 50:50. As shown in the example section successful results have been achieved with a wide range of ratios.

In a related embodiment, the ratio by weight between the one or more cross-linked starches and the one or more depolymerized starches in step a) is in the range 70:30 to 45:55, preferably 55:45 to 45:55, more preferably 50:50.

In a preferred embodiment, the ratio by weight between the one or more cross-linked starches and the one or more depolymerized starches in step a) is in the range 70:30 to 50:50.

The total amount of starch influences the organoleptic parameters of the final product. Thus, in an embodiment, the mixture of step a) comprises 3-25%wt of the one or more cross-linked starches and the one or more depolymerized starches in total, such as 5-13%wt, preferably 7-11%wt, more preferably 8-10%wt.

In a related embodiment, the mixture of step a) comprises 4-18%wt of the one or more cross-linked starches and the one or more depolymerized starches in total, preferably 6-14%wt.

In a related embodiment, the mixture of step a) comprises
- 1.2-23.5%wt of the one or more cross-linked starches; and
- 0.9-15%wt of the one or more depolymerized starches.

In an embodiment, the mixture in step a) has a water content in the range 10-30% by weight, preferably such as 15-25%.

In a further embodiment, the process further comprises adding one or more of the following components in step a) and/or step b) and or between step b) and d) such as between step b) and step c):
- one or more sugars and/or syrups, such as glucose-syrup, such as in the range 40-76% by weight; and/or
- one or more flavour components, such as liquorice; and/or
- one or more stabilizers; and/or
- one or more pH adjusters, such as acid; and/or
- one or more colorants; and/or
- one or more vitamins; and/or
- fibres.

### Step b)

The heating cooking can take place at different temperatures. In an embodiment, in step b) heating/cooking is performed at a temperature in the range 100-160°C, preferably 110-150°C.

In yet an embodiment, the mixture in step b) reaches a Degrees Brix (°Bx) in the range 70-80°Bx, preferably 72-76°Bx.

In a further embodiment, step b) is performed by batch cooking/open pan or pressurised cooking/continuous cooking.

### Step c)

In an embodiment, the process includes the step c) of moulding the mixture of step b), into a desired shape.

### Step d)

As also outlined above, the step of drying (stoving) can take place at different temperatures. In a preferred embodiment, step d) is performed at a temperature in the range 15-35°C, such as 15-30°C, such as 20-30°C, preferably in the range 22-28°C, more preferably 23-27°C.

In another preferred embodiment, step d) is performed at a temperature in the range 40-70°C, such as in the range 40-65°C, preferably in the range 45-65°C, more preferably in the range 50-65°C.

In yet an embodiment, step d) is performed for a period of 24-96 hours, preferably such as 24-72 hours, such as 48-72 hours.

In one preferred embodiment, d) is performed for a period of 24-96 hours, preferably such as 24-72 hours, such as 48-72 hours at a temperature in the range 22-28°C, preferably 23-27°C.

### Step e)

The provided gelled foodstuff preferably resembles gelatine based gelled foodstuff. Thus, in an embodiment, the provided gelled foodstuff, such as gummy candy, in step e) has
- a firmness resembling gelatine based gummy candy; and/or
- a texture resembling gelatine based gummy candy; and/or
- an elasticity resembling gelatine based gummy candy.

It is to be understood that the reference gelatine based gummy candy may be produced according to the recipe in example 2.

As outlined above, there is a need for gelled food products, which are free from gelatine or comprises less amounts of gelatine. Thus, in an embodiment, the provided gelled foodstuff in step e) comprises less than 1% by weight gelatine, such as less than 0.5%, such as less than 0.01%, preferably being free from gelatine. In another embodiment, the provided gelled foodstuff in step e) comprises 0.5-4%wt gelatine.

### Premixture and kit and uses thereof

As outlined in the example section, an optimized ratio of cross-linked starch to depolymerized starch has been identified. Thus, a premixture may be provided comprising such a ratio between the starches. Thus, an aspect of the invention relates to a composition comprising
- one or more cross-linked starches; and
- one or more depolymerized starches;

wherein the ratio by weight between the one or more cross-linked starches and the one or more depolymerized starches is in the range 90:10 to 45:55, preferably 70:30 to 45:55, more preferably 70:30 to 50:50;
wherein the mixture comprises 3-25% wt of the one or more cross-linked starches and the one or more depolymerized starches in total;
wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27);
wherein the one or more depolymerized starches has a level of dextrose equivalents (DE) below 2. Such as premixture/composition can be considered a "ready-to-use" starch composition for producing gelled candy.

In an aspect the invention relates to a composition comprising
- one or more cross-linked starches; and
- one or more depolymerized starches;

wherein the ratio by weight between the one or more cross-linked starches and the one or more depolymerized starches is in the range 60:40 to 45:55; preferably 60:40 to 50:50;
wherein the mixture comprises 3-25% wt of the one or more cross-linked starches and the one or more depolymerized starches in total.

In an embodiment, the composition comprises
- 40-90%wt of the one or more cross-linked starches; and
- 10-60%wt of one or more depolymerized starches.

In another embodiment, the composition comprises
- 45-60%wt of the one or more cross-linked starches; and
- 40-55%wt of one or more depolymerized starches.

In yet another embodiment, the composition comprises
- 50-70%wt of the one or more cross-linked starches; and
- 30-50%wt of the one or more depolymerized starches.

Thus, the starch composition may primarily be composed of the two starch types. In another embodiment, the composition comprises
- 20-80%wt, such 40-60%wt of the one or more cross-linked starches; and
- 40-60%wt of the one or more depolymerized starches.

In yet an embodiment, the composition comprises at the most 5%wt of components different from the one or more cross-linked starches and the one or more depolymerized starches, such as the most 5%wt, such as 4%wt, such as 3%wt, such as 2%wt, such as 1%wt, or such as being free or substantially free from components different from the one or more cross-linked starches and the one or more depolymerized starches.

In a further embodiment, the composition is a food ingredient, such as a gelling agent.

The two starches may also be delivered in separate containers including instructions for use. Thus, yet an aspect relates to a combination of parts comprising
- a first container comprising one or more cross-linked starches;
- a second container comprising one or more depolymerized starches; and
- instructions for performing a process according to the invention

wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

In a related embodiment, the foodstuff is gummy candy, wine gums or liquorice.

### Uses

The compositions and combinations according to the invention can have different uses. Hence, yet an aspect of the invention relates to the use of the composition or the combination of parts according to the invention as a gelling agent.

An embodiment, relates to the use according to the invention, in the preparation of a gelled foodstuff, such as confectionery, such as gummy candy or wine gums.

A further embodiment relates to said composition or combination of parts at least partly or fully replaces the use of gelatine in said foodstuff.

It should be noted that embodiments and features described in the context of one of the aspects of the present invention also apply to the other aspects of the invention.

The invention will now be described in further details in the following non-limiting examples.

### Examples

### Example 1 - Flow diagram of the process of the invention

Figure 1 shows a flow diagram of the process of the invention. The steps outlined below describes a preferred embodiment of the invention with reference to the numbering in figure 1.

### 1. Storage/Mixing tank:

The ingredients (see example 2) are heated up in the mixing tank to about 60°C for about 4 min.

### Between 1 and 2:

The sugar mass is circulated between the heated buffer tank and the cooking unit for about 6 min. at about 60°C.

### 2. Cooking step:

The cooking process takes approx. 30 minutes to get the sugar mass cooked optimal at 130°C. From the cooking unit to the vacuum chamber the temperature is lowered to 95°C.

### 3. Evaporation step:

When the sugar mass enters the vacuum chamber the evaporation step starts. The vacuum takes place to increase the °Brix and remove air bobbles from the mass. It takes only few minutes.

### 4. Addition of flavour, colour and acids

Addition of flavour, colour and acids takes place at the end of the process. pH is adjusted to about 1.5 - 3 with malic acid, citric acid and/or lactic acid. Desired flavour(s) and colour are added in the desired dosage.

### 5. Molding

Deposing the sugar mass into the molding starch. The molding starch is an oil-treated corn starch well known in the art. By this the desired shape is formed.

### 6. Stoving process

The gummies are dried at a temperature of 25°C or 50°C for 24-72 h, after which the finished products are provided.

### Example 2 - Optimization of the production of starch-containing gummy candy

### Aim of study

To optimize the sensory characters of the gummy candies to have a more gelatine-like character. Normally starch-based gummy candy is stoved at 50 - 65°C for 24-48 hours, and gelatine-based gummy candy is stoved at 25°C (room temperature) for 24-48 hours.

Thus, an aim is to identify starch combinations, which will allow for starch-based gummy candy production in facilities already optimized for stoving at 25°C. This will remove the need to change the drying facilities to enable stoving at 50°C (which is normally required for starch-based gummy candy).

### Materials and methods

The following ingredients were used in the production of a plant-based gummy candy; granulated sugar, glucose syrup, starch and water.

The gummies contain 8.8% (dry substance) modified starch(es). Ingredients and dosages are listed in Table 1.

**Table 1: Basic ingredients in the gummy candy.**

| **Ingredient** | **Dosage wt%** |
|---|---|
| Glucose syrup | 37 |
| Sugar | 31 |
| Water | 21 |
| Modified starches | 11 (8.8 DSwt%) |

The modified starches used in the gummy candies are mixtures of cross-linked potato starch and depolymerized starches in different ratios.

The tested starches are:

| Starch I | Acetylated distarch phosphate | cross-linked by trimetaphosphate |
|---|---|---|
| Starch II | Acetylated distarch adipate | cross-linked by adipic anhydride |
| Starch III | Acid hydrolysed starch | depolymerized by hydrochloric acid |
| Starch IV | Oxidized starch | depolymerized by hypochlorite |

All starches were provided in both a cook-up (CU) version and a pregelatinized version (CWS) by KMC.

### Production method:

The gummy candy was produced using either a pressurised cooking process or cooking in a batch process/open pan (OP).

Control:
- Gelatine 230 bloom (6% gelatin) dried for 48h at 25°C

Commercial reference:
- Starch (Gelamyl 802 (KMC))

Gelamyl 802 is among the best commercially available starches to be used for gelatine replacement in gummy candies.

Pressurized cooking (Princess JellyMaster produced by Chocotech GmbH, Germany) in the following named JM:
All ingredients are mixed in the mixer tank of the JellyMaster and heated up to 60°C and held for 4 min. The mixture is now named "sugar mass". The sugar mass is now pumped through a coil cooker and heated to 130°C. After heating the warm sugar mass is pumped to the vacuum tank where water is evaporated at 90°C to the desired solid content (also measured as °Brix). When the sugar mass has passed the vacuum tank it is ready to be deposited and molded. The °Brix value is used as an indication of the total solids (TS) which should be around 70-80 preferably between 72 and 76. Before molding, flavor and color are added, and pH is adjusted with acid. The last step in the cooking process is to deposit the sugar mass in the molding starch, followed by the stoving process where the gummy candies are placed at 25°C for 48-72h or at 50°C for 24h-48h.

Batch cooking (Open pan) in the following named OP:
Process for open pan gummi candies
1. Starch and water is heated in a Thermomixer at 90°C for 20-25 min.
2. The sugar and glucose syrup are heated in a pan to complete solution.
3. Slowly add the starch slurry to the boiling sugar, the speed of addition being such as not to cause the mixture to cease boiling.
4. Cook slowly to the final weight. Checking the °Brix solids using a refractometer. The aim is 74-75 °Brix.
5. Add acid, flavour, and colour.
6. Deposit the sugar mass into the molds and stove at 25°C for 48-72h or at 50°C for 24h-48h.

### Mixing ratios of modified starch:

Different combinations and mixing ratios have been tested. The tested ratio ranged from 30% depolymerized starch combined with 70% cross-linked starch up to 75% depolymerized starch combined 25% cross-linked starch.

### Results

**Table 2: Commercial reference and control**

| Sample | Composition | Stoving temperature | | Sensory evaluation | | |
|---|---|---|---|---|---|---|
| | | 25°C | 50°C | Firmness | Elasticity | Non-stickiness |
| 23 A | Gelamyl 802 (KMC) | x | | 3 | 5 | 5 |
| 23 B | Gelamyl 802 (KMC) | | x | 4 | 5 | 5 |
| 24 | 6% gelatine | x | | 10 | 10 | 10 |

**Table 3: Starch I (CWS) + Starch III (CU).**

| **Sample#** | **Ratio of cross-linked starch to depolymerized starch** | **Stoving temperature** | | **Sensory evaluation** | | |
|---|---|---|---|---|---|---|
| | Starch I (CWS) | 25°C | 50°C | Firmness | Elasticity | Non-stickiness |
| | Starch III (CU) | | | | | |
| 2 A - OP | 70:30 | X | | 8 | 9 | 9 |
| 2 B - OP | 70:30 | | X | 9 | 9 | 8 |
| 5 A - OP | 60:40 | X | | 7 | 8 | 8 |
| 5 B - OP | 60:40 | | X | 8 | 8 | 7 |
| 9 A - JM | 50:50 | X | | 8 | 8 | 9 |
| 9 B - JM | 50:50 | | X | 9 | 9 | 9 |
| 16 A - JM | 50*:50 | X | | 6 | 8 | 9 |
| 16 B - JM | 50*:50 | | X | 7 | 9 | 9 |
| 19 A - JM | 40:60 | X | | 5 | 6 | 7 |
| 19 B - JM | 40:60 | | X | 5 | 6 | 6 |
| 22 A - JM | 25:75 | X | | 2 | 3 | 3 |
| 22 B - JM | 25:75 | | X | 3 | 3 | 3 |

| | | | | | | |
|---|---|---|---|---|---|---|
| OP: Batch cooking; JM: Pressurized cooking *: made by drum drying. | | | | | | |

The sensory attributes firmness, elasticity and non-stickiness were assessed by a trained sensory panel consisting of 6 assessors. A gelatine-based gummy candy was used as reference and was scored 10 on a scale from 1 to 10 in all 3 attributes. Firmness was assessed by biting through the gummy with the front teeth. Elasticity was evaluated by the ability to bounce by biting. Non-stickiness was evaluated by assessing if the gummy candy sticked to the molar teeth - the less sticky the higher score.

Gummy candies are considered acceptable if the total score is 15 or higher.

### Conclusion

The results show that a ratio between a pregelatinized cross-linked starch and cook-up depolymerised starch above 25:75, such as 40:60, such as 50:50, such as 60:40 or such as 70:30 provides satisfactory results.

A ratio of 25:75 does not appear to generate satisfactory results.

The results further show that the methods work using different production methods such as a pressurised cooking or open pan.

The results also show that the method works both if the cross-linked starch is spray-cooked or drum-dried. In trial #16 the cross-linked starch is pregelatinized by drum drying whereas the others are made with starches pregelatinized by spray-cooking.

Also is shown that the stoving temperature does not have a big influence on the sensory evaluation and thereby it is shown that stoving at 25°C is unexpectedly as good at stoving at 50°C.

### Example 3 - Testing different modified starches

### Aim of study

To determine if cross-linked and depolymerised cook-up starches in different combinations can also be used in the process.

### Materials and methods

See also example 2.

### Results

**Table 4: Starch I (CU) + Starch III (CU)**

| **Sample#** | **Ratio of cross-linked starch to depolymerized starch** | **Stoving temperature** | | **Sensory evaluation** | | |
|---|---|---|---|---|---|---|
| | Starch I (CU) | 25°C | 50°C | Firmness | Elasticity | Non-stickiness |
| | Starch III (CU) | | | | | |
| 1 A - JM | 70:30 | X | | 7 | 8 | 8 |
| 1 B - JM | 70:30 | | X | 8 | 8 | 8 |
| 4 A - JM | 60:40 | X | | 7 | 8 | 8 |
| 4 B - JM | 60:40 | | X | 8 | 7 | 7 |
| 7 A - JM | 50:50 | x | | 8 | 8 | 8 |
| 7 B - JM | 50:50 | | X | 8 | 8 | 7 |
| 21 A - JM | 25:75 | X | | 1 | 2 | 3 |
| 21 B - JM | 25:75 | | X | 2 | 2 | 3 |

| | | | | | | |
|---|---|---|---|---|---|---|
| JM: Pressurised cooking; | | | | | | |

### Conclusion

The results shows that a combination of a cook-up cross-linked starch and a cook-up depolymerised starch can also provide good results.

Again, the data shows that a ratio between the cross-linked starch and depolymerised starch above 25:75, such as 50:50, 60:40 and 70:30 provides satisfactory results.

Sample #21 B is comparable to gummy candies according to WO 00/44241.

### Example 4 - Testing different modified starch combinations - all pregelatinized

### Materials and methods

See also examples 1-3.

**Table 5: Starch I (CWS) + Starch III (CWS)**

| **Sample#** | **Ratio of cross-linked starch to depolymerized starch** | **Stoving temperature** | | **Sensory evaluation** | | |
|---|---|---|---|---|---|---|
| | Starch I (CWS) | 25°C | 50°C | Firmness | Elasticity | Non-stickiness |
| | Starch III (CWS) | | | | | |
| 3 A - JM | 70:30 | X | | 8 | 8 | 8 |
| 3 B - JM | 70:30 | | X | 8 | 8 | 7 |
| 6 A - JM | 60:40 | X | | 7 | 7 | 8 |
| 6 B - JM | 60:40 | | X | 8 | 7 | 8 |
| 12 A - JM | 50:50 | x | | 8 | 7 | 9 |
| 12 B - JM | 50:50 | | X | 7 | 8 | 9 |
| 20 A - JM | 40:60 | X | | 3 | 5 | 7 |
| 20 B - JM | 40:60 | | X | 4 | 5 | 6 |

| | | | | | | |
|---|---|---|---|---|---|---|
| JM: Jelly Master | | | | | | |

### Conclusion

The results shows that a combination of a pregelatinized cross-linked starch and a pregelatinized depolymerised starch can also provide good results.

Again, the data shows that a ratio between the cross-linked starch and depolymerised starch above 25:75, such as 40:60 such as 50:50, 60:40 and 70:30 provides satisfactory results. A ratio of 40:60 is less good than the other tested ratios, but still outperforms comparative controls (compare samples #20 with #21 (Table 4) or #22 (Table 3)).

### Example 5 - Testing different types of cross-linked starches in combination with a depolymerised starch

### Materials and methods

See also examples 1-4.

**Table 6: Different starch combinations**

| **Sample#** | **Ratio of cross-linked starch to depolymerised starch** | **Stoving temperature** | | **Sensory evaluation** | | |
|---|---|---|---|---|---|---|
| | Starch II (CU) | 25°C | 50°C | Firmness | Elasticity | Non-stickiness |
| | Starch III (CU) | | | | | |
| 8 A - JM | 50:50 | X | | 7 | 7 | 8 |
| 8 B - JM | 50:50 | | X | 8 | 8 | 7 |
| | Starch II (CWS) | | | | | |
| | Starch III (CU) | | | | | |
| 10 A - JM | 50:50 | X | | 7 | 8 | 9 |
| 10 B - JM | 50:50 | | X | 8 | 9 | 9 |
| | Starch II (CWS) | | | | | |
| | Starch III (CWS) | | | | | |
| 13 A - JM | 50:50 | X | | 7 | 7 | 8 |
| 13 B - JM | 50:50 | | X | 7 | 8 | 8 |
| | Starch II (CWS)* | | | | | |
| | Starch III (CU) | | | | | |
| 17 A-JM | 50*: 50 | X | | 7 | 8 | 9 |
| 17 B-JM | 50*: 50 | | X | 8 | 9 | 8 |
| | Starch I (CU) | | | | | |
| | Starch IV (CU) | | | | | |
| 14 A - OP | 50:50 | X | | 7 | 8 | 7 |
| 14 B - OP | 50:50 | | X | 8 | 8 | 7 |
| | Starch I (CWS) | | | | | |
| | Starch IV (CU) | | | | | |
| 15 A - OP | 50:50 | X | | 7 | 8 | 7 |
| 15 B - OP | 50:50 | | X | 8 | 8 | 7 |

| | | | | | | |
|---|---|---|---|---|---|---|
| OP: Batch cooking; JM: Pressurised cooking; *: Cross-linked starch is a pregelatinized starch. | | | | | | |

### Conclusion

The results demonstrate that combining different starch modifications according to the invention can provide good results.

The results further show that the methods work using different production methods such as a pressurised cooking or open pan.

## Claims

1. A process for producing gelled foodstuff, such as gummy candy, the process comprising
a) providing a mixture comprising
- one or more cross-linked starches;
- one or more depolymerized starches; and
- a water content in the range 10-30% by weight;
wherein the ratio by weight between the one or more cross-linked starches and the one or more depolymerized starches is in the range 90:10 to 45:55, preferably 70:30 to 45:55,
wherein the mixture comprises 3-25% wt of the one or more cross-linked starches and the one or more depolymerized starches in total;
b) cooking the mixture of step a) at a temperature in the range 100-160°C, preferably until the mixture reaches a Degrees Brix (°Bx) in the range 70-80°Bx, thereby providing a heated gummy mass;
c) optionally, molding the gelled mass of step b), into a desired shape;
d) drying the heated gummy mass of step b) or optionally step c) at a temperature in the range 10-70°C, preferably in the range 20-65°C; and
e) providing a gelled foodstuff, such as gummy candy;
wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

2. The process according to claim 1, wherein the one or more cross-linked starches in step a) are selected from the group consisting of
i) distarch phosphate, such as acetylated distarch phosphate, hydroxypropylated distarch phosphate; and
ii) acetylated distarch adipate.

3. The process according to claim 1 or 2, wherein in drying step d) is performed for 24-96 hours, such as 24-72 hours, preferably 48-72 hours

4. The process according to any of the preceding claims, wherein the one or more depolymerized starches in step a) are selected from the group consisting of
i) acid hydrolysed starch, such as acetylated acid hydrolysed starch, hydroxypropylated acid hydrolysed starch,
ii) oxidised starch, such as acetylated oxidised starch, hydroxypropylated oxidised starch, and
iii) enzymatically hydrolysed starch, such as enzymatically hydrolysed modified starch.

5. The process according to any of the preceding claims, wherein the one or more cross-linked starches and/or the one or more depolymerized starches in step a) are selected from the group consisting of root and tuber starches, preferably potato starch or tapioca starch, more preferably both being potato starches.

6. The process according to any of the preceding claims, wherein one or more of the cross-linked starches in step a) is a pregelatinized starch and/or wherein one or more of the depolymerized starches in step a) is a pregelatinized starch.

7. The process according to any of the preceding claims, wherein the ratio by weight between the one or more cross-linked starches and the one or more depolymerized starches in step a) is in the range 70:30 to 45:55, preferably 55:45 to 45:55; or
wherein the ratio by weight between the one or more cross-linked starches and the one or more depolymerized starches in step a) is in the range 70:30 to 50:50.

8. The process according to any of the preceding claims, wherein the mixture of step a) comprises 4-18%wt of the one or more cross-linked starches and the one or more depolymerized starches in total, preferably 6-14%wt of the one or more cross-linked starches and the one or more depolymerized starches in total.

9. The process according to any of the preceding claims, wherein step d) is performed at a temperature in the range 15-35°C, such as 15-30°C, such as 20-30°C,

10. The process according to any of the preceding claims 1-8, wherein step d) is performed at a temperature in the range 40-70°C, such as in the range 40-65°C, preferably in the range 45-65°C, more preferably in the range 50-65°C.

11. A composition comprising
- one or more cross-linked starches; and
- one or more depolymerized starches;
wherein the ratio by weight between the one or more cross-linked starches and the one or more depolymerized starches is in the range 90:10 to 45:55, preferably 70:30 to 45:55, more preferably 70:30 to 50:50;
wherein the mixture comprises 3-25% wt of the one or more cross-linked starches and the one or more depolymerized starches in total;
wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27);
wherein the one or more depolymerized starches has a level of dextrose equivalents (DE) below 2.

12. The composition according to claim 11 comprising
- 50-90%wt of the one or more cross-linked starches; and
- 10-50%wt of the one or more depolymerized starches.

13. A combination of parts comprising
- a first container comprising one or more cross-linked starches;
- a second container comprising one or more depolymerized starches; and
- instructions for performing a process according to any of claims 1-10;
wherein the one or more cross-linked starches has a sedimentation volume in the range 25% to 99% of the tested volume, wherein sedimentation volume is determined as described in JECFA Monograph 27 for modified starches (Compendium of Food Additive Specifications. Joint FAO/WHO Expert Committee on Food Additives (JECFA), 92nd meeting 2021. FAO JECFA Monographs 27); and
wherein the one or more depolymerized starches has a level of dextrose equivalents (DE) below 2.

14. Use of the composition according to any of claims 11-12 or the combination of parts according to claim 13 as a gelling agent; preferably in the preparation of a gelled foodstuff, such as confectionery, such as gummy candy or wine gums.

## Patentansprüche

1. Prozess zur Herstellung von gelierten Lebensmitteln, wie beispielsweise Gummibonbons, wobei der Prozess umfasst
a) Bereitstellen eines Gemisches, das umfasst
- eine oder mehrere vernetzte Stärken;
- eine oder mehrere depolymerisierte Stärken; und
- einen Wassergehalt in dem Bereich von 10 - 30 Gewichts-%;
wobei das Gewichtsverhältnis zwischen der einen oder den mehreren vernetzten Stärken und der einen oder den mehreren depolymerisierten Stärken in dem Bereich von 90 : 10 bis 45 : 55, vorzugsweise von 70 : 30 bis 45 : 55, liegt,
wobei das Gemisch insgesamt 3 - 25 Gewichts-% der einen oder der mehreren vernetzten Stärken und der einen oder der mehreren depolymerisierten Stärken umfasst;
b) Kochen des Gemisches aus Schritt a) bei einer Temperatur in dem Bereich von 100 - 160 °C, vorzugsweise bis das Gemisch einen Grad Brix (°Bx) in dem Bereich von 70 - 80 °Bx erreicht, wodurch eine erhitzte Gummimasse bereitgestellt wird;
c) optional Formen der gelierten Masse aus Schritt b) in eine gewünschte Form;
d) Trocknen der erhitzten Gummimasse aus Schritt b) oder optional aus Schritt c) bei einer Temperatur in dem Bereich von 10 - 70 °C, vorzugsweise in dem Bereich von 20 - 65 °C; und
e) Bereitstellen eines gelierten Lebensmittels, wie beispielsweise Gummibonbons;
wobei die eine oder die mehreren vernetzten Stärken ein Sedimentationsvolumen in dem Bereich von 25 % bis 99 % des Testvolumens aufweisen, wobei das Sedimentationsvolumen bestimmt wird wie beschrieben in JECFA Monograph 27 für modifizierte Stärken (Compendium of Food Additive Specifications. Joint FAO/WHO Expert Committee on Food Additives (JECFA), 92. Meeting 2021. FAO JECFA Monographs 27); und
wobei die eine oder die mehreren depolymerisierten Stärken einen Dextroseäquivalentgehalt (DE) von unter 2 aufweisen.

2. Prozess nach Anspruch 1, wobei die eine oder die mehreren vernetzten Stärken in Schritt a) ausgewählt sind aus der Gruppe bestehend aus
i) Distärkephosphat, wie beispielsweise acetyliertes Distärkephosphat, hydroxypropyliertes Distärkephosphat; und
ii) acetyliertes Distärkeadipat.

3. Prozess nach Anspruch 1 oder 2, wobei der Trocknungsschritt d) 24 - 96 Stunden, wie beispielsweise 24 - 72 Stunden, vorzugsweise 48 - 72 Stunden, durchgeführt wird.

4. Prozess nach einem der vorstehenden Ansprüche, wobei die eine oder die mehreren depolymerisierten Stärken in Schritt a) ausgewählt sind aus der Gruppe bestehend aus
i) säurehydrolysierter Stärke, wie beispielsweise acetylierter säurehydrolysierter Stärke, hydroxypropylierter säurehydrolysierter Stärke,
ii) oxidierter Stärke, wie beispielsweise acetylierter oxidierter Stärke, hydroxypropylierter oxidierter Stärke, und
iii) enzymatisch hydrolysierter Stärke, wie beispielsweise enzymatisch hydrolysierter modifizierter Stärke.

5. Prozess nach einem der vorstehenden Ansprüche, wobei die eine oder die mehreren vernetzten Stärken und/oder die eine oder die mehreren depolymerisierten Stärken in Schritt a) ausgewählt sind aus der Gruppe bestehend aus Wurzel- und Knollenstärken, vorzugsweise Kartoffelstärke oder Tapiokastärke, bevorzugter sind beide Kartoffelstärken.

6. Prozess nach einem der vorstehenden Ansprüche, wobei eine oder mehrere der vernetzten Stärken in Schritt a) eine vorgelatinierte Stärke ist und/oder wobei ein oder mehrere der depolymerisierten Stärken in Schritt a) eine vorgelatinierte Stärke ist.

7. Prozess nach einem der vorstehenden Ansprüche, wobei das Gewichtsverhältnis zwischen der einen oder den mehreren vernetzten Stärken und der einen oder den mehreren depolymerisierten Stärken in Schritt a) in dem Bereich von 70 : 30 bis 45 : 55, vorzugsweise von 55 : 45 bis 45 : 55, liegt; oder
wobei das Gewichtsverhältnis zwischen der einen oder den mehreren vernetzten Stärken und der einen oder den mehreren depolymerisierten Stärken in Schritt a) in dem Bereich von 70 : 30 bis 50 : 50 liegt.

8. Prozess nach einem der vorstehenden Ansprüche, wobei das Gemisch aus Schritt a) insgesamt 4 - 18 Gew.-% der einen oder der mehreren vernetzten Stärken und der einen oder der mehreren depolymerisierten Stärken umfasst, vorzugsweise insgesamt 6 - 14 Gew.-% der einen oder mehreren vernetzten Stärken und der einen oder mehreren depolymerisierten Stärken.

9. Prozess nach einem der vorstehenden Ansprüche, wobei Schritt d) bei einer Temperatur in dem Bereich von 15 - 35 °C, wie beispielsweise 15 - 30 °C, wie beispielsweise 20 - 30 °C, durchgeführt wird,

10. Prozess nach einem der vorstehenden Ansprüche 1 - 8, wobei Schritt d) bei einer Temperatur in dem Bereich von 40 - 70 °C, wie beispielsweise in dem Bereich von 40 - 65 °C, vorzugsweise in dem Bereich von 45 - 65 °C, bevorzugter in dem Bereich von 50 - 65 °C, durchgeführt wird.

11. Zusammensetzung, umfassend
- eine oder mehrere vernetzte Stärken; und
- eine oder mehrere depolymerisierte Stärken;
wobei das Gewichtsverhältnis zwischen der einen oder den mehreren vernetzten Stärken und der einen oder den mehreren depolymerisierten Stärken in dem Bereich von 90 : 10 bis 45 : 55, vorzugsweise von 70 : 30 bis 45 : 55, bevorzugter von 70 : 30 bis 50 : 50 liegt;
wobei das Gemisch insgesamt 3 - 25 Gew.-% der einen oder der mehreren vernetzten Stärken und der einen oder der mehreren depolymerisierten Stärken umfasst;
wobei die eine oder die mehreren vernetzten Stärken ein Sedimentationsvolumen in dem Bereich von 25 % bis 99 % des Testvolumens aufweisen, wobei das Sedimentationsvolumen bestimmt wird wie beschrieben in JECFA Monograph 27 für modifizierte Stärken (Compendium of Food Additive Specifications. Joint FAO/WHO Expert Committee on Food Additives (JECFA), 92. Meeting 2021. FAO JECFA Monographs 27);
wobei die eine oder die mehreren depolymerisierten Stärken einen Dextroseäquivalentgehalt (DE) von unter 2 aufweisen.

12. Zusammensetzung nach Anspruch 11, umfassend
- 50 - 90 Gew.-% der einen oder der mehreren vernetzten Stärken; und
- 10 - 50 Gew.-% der einen oder der mehreren depolymerisierten Stärken.

13. Kombination von Teilen, umfassend
- einen ersten Behälter, der eine oder mehrere vernetzte Stärken umfasst;
- einen zweiten Behälter, der eine oder mehrere depolymerisierte Stärken umfasst; und
- Anweisungen zur Durchführung eines Prozesses nach einem der Ansprüche 1 - 10;
wobei die eine oder die mehreren vernetzten Stärken ein Sedimentationsvolumen in dem Bereich von 25 % bis 99 % des Testvolumens aufweisen, wobei das Sedimentationsvolumen bestimmt wird wie beschrieben in JECFA Monograph 27 für modifizierte Stärken (Compendium of Food Additive Specifications. Joint FAO/WHO Expert Committee on Food Additives (JECFA), 92. Meeting 2021. FAO JECFA Monographs 27); und
wobei die eine oder die mehreren depolymerisierten Stärken einen Dextroseäquivalentgehalt (DE) von unter 2 aufweisen.

14. Verwendung der Zusammensetzung nach einem der Ansprüche 11 - 12 oder der Kombination von Teilen nach Anspruch 13 als ein Geliermittel; vorzugsweise bei der Herstellung eines gelierten Lebensmittels, wie beispielsweise Süßwaren, wie beispielsweise Gummibonbons oder Weingummis.

## Revendications

1. Procédé de fabrication d'un produit alimentaire gélifié, tel qu'un bonbon gomme, le procédé comprenant les étapes consistant à :
a) fournir un mélange comprenant
- un ou plusieurs amidons réticulés ;
- un ou plusieurs amidons dépolymérisés ; et
- une teneur en eau dans la plage de 10-30 % en poids ;
le rapport en poids entre lesdits un ou plusieurs amidons réticulés et lesdits un ou plusieurs amidons dépolymérisés se situant dans la plage de 90:10 à 45:55, de préférence de 70:30 à 45:55,
le mélange comprenant au total 3-25 % en poids desdits un ou plusieurs amidons réticulés et desdits un ou plusieurs amidons dépolymérisés ;
b) cuire le mélange de l'étape a) à une température dans la plage de 100-160 °C, de préférence jusqu'à ce que le mélange atteigne un degré Brix (°Bx) dans la plage de 70-80°Bx, pour obtenir une masse gommeuse chauffée ;
c) en option, mouler en une forme souhaitée la masse gélifiée de l'étape b) ;
d) sécher la masse gommeuse chauffée de l'étape b) ou en option de l'étape c) à une température dans la plage de 10-70 °C, de préférence dans la plage de 20-65 °C ; et
e) fournir un produit alimentaire gélifié, tel qu'un bonbon gomme ;
dans lequel lesdits un ou plusieurs amidons réticulés présentent un volume de sédimentation dans la plage de 25 % à 99 % du volume testé, le volume de sédimentation étant déterminé comme décrit dans la monographie 27 du JECFA pour les amidons modifiés (Compendium of Food Additive Specifications. Joint FAO/WHO Expert Committee on Food Additives (JECFA), 92nd meeting 2021. FAO JECFA Monographs 27) ; et
dans lequel lesdits un ou plusieurs amidons dépolymérisés ont un taux d'équivalents de dextrose (DE) inférieur à 2.

2. Procédé selon la revendication 1, dans lequel lesdits un ou plusieurs amidons réticulés dans l'étape a) sont choisis dans le groupe constitué par
i) un phosphate de diamidon, tel que le phosphate de diamidon acétylé, le phosphate de diamidon hydroxypropylé ; et
ii) l'adipate de diamidon acétylé.

3. Procédé selon la revendication 1 ou 2, dans lequel l'étape de séchage d) est effectuée pendant 24-96 heures, par exemple 24-72 heures, de préférence 48-72 heures

4. Procédé selon l'une quelconque des revendications précédentes, dans lequel lesdits un ou plusieurs amidons dépolymérisés dans l'étape a) sont choisis dans le groupe constitué par
i) un amidon hydrolysé par voie acide, tel qu'un amidon hydrolysé par voie acide acétylé, un amidon hydrolysé par voie acide hydroxypropylé,
ii) un amidon oxydé, tel qu'un amidon oxydé acétylé, un amidon oxydé hydroxypropylé, et
iii) un amidon hydrolysé par voie enzymatique, tel qu'un amidon modifié hydrolysé par voie enzymatique.

5. Procédé selon l'une quelconque des revendications précédentes, dans lequel lesdits un ou plusieurs amidons réticulés et/ou lesdits un ou plusieurs amidons dépolymérisés dans l'étape a) sont choisis dans le groupe constitué par les amidons de racines et de tubercules, de préférence l'amidon de pomme de terre ou l'amidon de tapioca, plus préférablement les uns et les autres étant des amidons de pomme de terre.

6. Procédé selon l'une quelconque des revendications précédentes, dans lequel un ou plusieurs des amidons réticulés dans l'étape a) sont des amidons prégélatinisés et/ou dans lequel un ou plusieurs des amidons dépolymérisés dans l'étape a) sont des amidons prégélatinisés.

7. Procédé selon l'une quelconque des revendications précédentes, dans lequel le rapport en poids entre lesdits un ou plusieurs amidons réticulés et lesdits un ou plusieurs amidons dépolymérisés dans l'étape a) se situe dans la plage de 70:30 à 45:55, de préférence de 55:45 à 45:55 ; ou
dans lequel le rapport en poids entre lesdits un ou plusieurs amidons réticulés et lesdits un ou plusieurs amidons dépolymérisés dans l'étape a) se situe dans la plage de 70:30 à 50:50.

8. Procédé selon l'une quelconque des revendications précédentes, dans lequel le mélange de l'étape a) comprend au total 4-18 % en poids desdits un ou plusieurs amidons réticulés et desdits un ou plusieurs amidons dépolymérisés, de préférence au total 6-14 % en poids desdits un ou plusieurs amidons réticulés et desdits un ou plusieurs amidons dépolymérisés.

9. Procédé selon l'une quelconque des revendications précédentes, dans lequel l'étape d) est effectuée à une température dans la plage de 15-35 °C, par exemple de 15-30 °C, par exemple de 20-30 °C.

10. Procédé selon l'une quelconque des revendications 1-8 précédentes, dans lequel l'étape d) est effectuée à une température dans la plage de 40-70 °C, par exemple dans la plage de 40-65 °C, de préférence dans la plage de 45-65 °C, plus préférablement dans la plage de 50-65 °C.

11. Composition, comprenant
- un ou plusieurs amidons réticulés ; et
- un ou plusieurs amidons dépolymérisés ;
dans laquelle le rapport en poids entre lesdits un ou plusieurs amidons réticulés et lesdits un ou plusieurs amidons dépolymérisés se situe dans la plage de 90:10 à 45:55, de préférence de 70:30 à 45:55, plus préférablement de 70:30 à 50:50 ;
dans laquelle le mélange comprend au total 3-25 % en poids desdits un ou plusieurs amidons réticulés et desdits un ou plusieurs amidons dépolymérisés ;
dans laquelle lesdits un ou plusieurs amidons réticulés présentent un volume de sédimentation dans la plage de 25 % à 99 % du volume testé, le volume de sédimentation étant déterminé comme décrit dans la monographie 27 du JECFA pour les amidons modifiés (Compendium of Food Additive Specifications. Joint FAO/WHO Expert Committee on Food Additives (JECFA), 92nd meeting 2021. FAO JECFA Monographs 27) ; et
dans laquelle lesdits un ou plusieurs amidons dépolymérisés ont un taux d'équivalents de dextrose (DE) inférieur à 2.

12. Composition selon la revendication 11, comprenant
- 50-90 % en poids desdits un ou plusieurs amidons réticulés ; et
- 10-50 % en poids desdits un ou plusieurs amidons dépolymérisés.

13. Combinaison de parties, comprenant
- un premier récipient comprenant un ou plusieurs amidons réticulés ;
- un second récipient comprenant un ou plusieurs amidons dépolymérisés ; et
- des instructions pour exécuter un procédé selon l'une quelconque des revendications 1-10 ;
dans laquelle lesdits un ou plusieurs amidons réticulés présentent un volume de sédimentation dans la plage de 25 % à 99 % du volume testé, le volume de sédimentation étant déterminé comme décrit dans la monographie 27 du JECFA pour les amidons modifiés (Compendium of Food Additive Specifications. Joint FAO/WHO Expert Committee on Food Additives (JECFA), 92nd meeting 2021. FAO JECFA Monographs 27) ; et
dans laquelle lesdits un ou plusieurs amidons dépolymérisés ont un taux d'équivalents de dextrose (DE) inférieur à 2.

14. Utilisation de la composition selon l'une quelconque des revendications 11-12 ou de la combinaison de parties selon la revendication 13 en tant qu'agent gélifiant ; de préférence dans la préparation d'un produit alimentaire gélifié, tel qu'une confiserie, par exemple un bonbon gomme ou des gommes au vin.
